# EUROPÄISCHE PATENTANMELDUNG

(11) **EP 2 461 269 A1**
(43) Veröffentlichungstag der Anmeldung: **06.06.2012**
(21) Anmeldenummer: 11191619.3
(22) Anmeldetag: 01.12.2011
(51) Int. Cl.: G06K 7/10, G06F 3/03

(54) **Texterfassungsvorrichtung**

(30) Priorität: 03.12.2010 DE 102010053460
(71) Anmelder: Piechura, Manfred, 58313 Herdecke (DE)
(72) Erfinder: Piechura, Manfred, 58313 Herdecke (DE)
(74) Vertreter: Kötter, Ulrich

(57) **Zusammenfassung**

Die Erfindung betrifft eine Vorrichtung zur Erstellung und gleichzeitigen digitalen Erfassung von handschriftlichen Texten, umfassend einen Stift zum Auftrag von Tinte auf einem mit einem Mikroraster versehenen Papier, eine Kamera zur visuellen Erfassung der Schreibbewegung des Stiftes auf dem Mikroraster des Papiers, eine mit einer Speichereinheit verbundene Prozessoreinheit zur Erfassung und Speicherung des durch die Kamera visuell aufgezeichneten Textes, wobei eine Schnittstelle zur Übertragung eines Textes aus der Speichereinheit zu einem externen Speichermedium angeordnet sind, wobei Mittel zur Erfassung eines Barcodes angeordnet sind und dass die Schnittstelle nach dem HL7-Standard ausgebildet ist.

Die Erfindung betrifft weiterhin ein Verfahren zur zeitnahen zentralen Erfassung von handschriftlich verfassten Patienteninformationen in einem Krankenhaus, wobei die Patienteninformationen mit einer Vorrichtung nach einem der vorgenannten Ansprüche niedergeschrieben und digital abgelegt werden, über einen Barcode eine Patientenkennnummer eingelesen wird, der Datensatz der digital abgelegten Patienteninformationen dieser Patientenkennnummer zugeordnet wird und der Datensatz anschließend über eine H7-Schnittstelle in einen Speicher des Krankenhauscomputersystem übertragen werden, wo sie in einer der Patientenkennnummer zugeordneten digitalen Patientenakte abgelegt werden.

## Beschreibung

Die Erfindung betrifft eine Vorrichtung zur Erstellung und gleichzeitigen digitalen Erfassung von handschriftlichen Texten nach dem Oberbegriff des Patentanspruches 1. Die Erfindung betrifft weiterhin ein Verfahren zur zeitnahen zentralen Erfassung von handschriftlich verfassten Patienteninformationen in einem Krankenhaus nach dem Patentanspruch 10.

Zur Ablage und Bearbeitung medizinischer und administrativer Daten in Krankenhäusern kommen umfangreiche Krankenhausinformationssysteme zum Einsatz. Ziel ist es, sämtliche Daten eines Patienten zentral verfügbar zu machen. Problematisch hierbei ist, dass Patientendaten an unterschiedlichsten Orten mit unterschiedlichen Medien aufgenommen werden. So erfolgt die erste Erfassung eines Befundes beispielsweise durch das Personal eines Krankenwagens. Der erste Befund wird zusammen mit den Personen kenndaten schriftlich niedergelegt und an den erstbehandeinden Arzt nach Einlieferung des Patienten im Krankhaus berichtet. Anschließend erfolgt eine Untersuchung des aufnehmenden Arztes, der wiederum einen Befund schriftlich niederlegt. Nach Einlieferung des Patienten erfolgt an einer zentralen Stelle die Aufnahme von Personenstammdaten und es wird im Krankeninformationssystem ein Stammdatensatz angelegt. Zur Zuordnung sämtlicher patientenrelevanter Vorgänge zu diesen Stammdaten wird ein eindeutiger Barcode erstellt und es wird ein dementsprechender Barcodeaufkleber generiert, mit denen patientenbezogene Dokumente gekennzeichnet werden. Nachteilig an dem System ist, dass die an unterschiedlichen Orten und unterschiedlichen Zeiten teilweise handschriftlich erfassten Daten nur sehr aufwendig in das Informationssystem eingepflegt werden können, wobei hierzu eingescannte handschriftliche Aufzeichnungen oftmals nur schwer zu entziffern sind. Aufgrund des aufwendigen Datentransfers ergibt sich zudem eine Zeitverzögerung, wodurch aktuellste Daten oftmals nicht sofort verfügbar sind.

Hier will die Erfindung Abhilfe schaffen. Der Erfindung liegt die Aufgabe zugrunde, eine Vorrichtung zur Erstellung und gleichzeitigen digitalen Erfassung von handschriftlichen Texten zu schaffen, welche eine zeitnahe Überführung der patientenrelevanten Daten in ein Krankenhausinformationssystem ermöglicht. Gemäß der Erfindung wird diese Aufgabe durch einen Digitalisierstift nach dem Oberanspruch des Patentanspruchs 1 gelöst, bei dem Mittel zur Erfassung eines Barcodes angeordnet sind und der eine Schnittstelle aufweist, die nach dem HL7-Standard ausgebildet ist.

Mit der Erfindung ist eine Vorrichtung zur Erstellung und gleichzeitigen digitalen Erfassung von handschriftlichen Texten geschaffen, welche eine zeitnahe Überführung von handschriftlich erfassten Patientendaten in ein Krankenhausinformationssystem ermöglicht. Ausgangspunkt der Erfindung ist dabei ein Digitalisierstift, wie er aus der US 2007/0005849 A1 bekannt ist. Dieser Stift umfasst eine von einer Tintenpatrone gespeisten Schreibfeder sowie einen hinter der Feder angeordneten Bildsensor, über den die Digitalisierung des geschriebenen Textes erfolgt. Die von dem Bildsensor erfassten handschriftlichen Textdaten werden über eine Prozessoreinheit in eine Speichereinheit transferiert, wobei eine Schnittstelle zur Übertragung des so erfassten Textes aus der Speichereinheit zu einem externen Speichermedium angeordnet ist. Mit Hilfe dieses vorbekannten Stiftes ist es somit ermöglicht, handschriftliche Texte unmittelbar bei deren Erstellung digital zu erfassen, abzulegen und anschließend über eine Schnittstelle zu transferieren. Darüber hinaus ist in dem vorbekannten Digitalisierstift ein Mikrofon integriert, welches es ermöglicht, während der Erstellung des handschriftlichen Textes ausgesprochene Bemerkungen aufzunehmen und synchron zu dem erfassten Text abzulegen. Hierdurch können zusätzliche wertvolle Informationen zu den bei der Befundaufnahme oftmals sehr knapp verfassten handschriftlichen Texten abgelegt werden.

Der Gegenstand der Erfindung bildet diesen vorbenannten Digitalisierstift derart weiter, dass eine unmittelbare Zuordnung von verfassten Texten zu einem Patienten bereits innerhalb des Stiftes ermöglicht ist. Hierzu ist der Stift mit Mitteln zur Erfassung eines Barcodes versehen, wodurch eine unmittelbare Identifizierung des jeweiligen Patienten über den im Krankenhausbereich üblicherweise erzeugten Barcode ermöglicht ist. Zum direkten Transfer der erfassten Daten in das Krankhausinformationssystem ist der Digitalisierstift zudem mit einer Schnittstelle nach dem HL7-Standard ausgebildet. Dadurch ist eine direkte Interoperabilität zwischen Digitalisierstift und Krankenhausinformationssystem geschaffen.

In Ausgestaltung der Erfindung umfassen die Mittel zur Erfassung eines Barcodes einen an dem Stift angeordneten Barcodescanner. Hierdurch ist eine einfache Adaption eines Barcodelesemoduls ermöglicht.

In vorteilhafter Ausgestaltung der Erfindung ist der Barcodescanner durch die in den Digitalisierstift vorhandene Kamera selbst gebildet, wobei eine Lichtquelle zur Projektion eines Punktlichts auf einen zu lesenden Barcode angeordnet ist. Hierdurch ist eine kompakte Bauweise erzielt.

In weiterer Ausgestaltung der Erfindung sind an dem Stift Mittel zur Aktivierung der Lichtquelle angeordnet, wobei die Prozessoreinheit derart eingerichtet ist, dass sie bei aktivierter Lichtquelle in einen Barcode-Mode versetzt wird, bei dem die von der Kamera gelieferten Hell-Dunkel-Folgen eines Barcodes in einen numerischen Code umgewandelt werden. Hierdurch ist die Implementierung von zwei Datenerfassungsmodi ermöglicht, wobei im Barcode-Mode lediglich die numerische Codierung der Hell-Dunkel-Folgen, nicht jedoch das digitale Abbild des Barcodes abgelegt wird.

In weiterer Ausgestaltung der Erfindung weist der Stift eine einfahrbare Schreibfeder auf, wobei die Vorrichtung derart eingerichtet ist, dass bei Einfahren der Schreibfeder die Lichtquelle aktiviert wird und die Prozessoreinheit in den Barcode-Mode versetzt wird.

Vorteilhaft ist ein Mikrofon angeordnet, welches derart mit der Prozessoreinheit verbunden ist, dass von dem Mikrofon aufgenommene Audiosignale synchron zu geschriebenen Texten in dem Speicher abgelegt werden. Hierdurch ist die Ergänzung von mündlichen Anmerkungen des Benutzers bei der Erfassung der Patientendaten ermöglicht.

In Weiterbildung der Erfindung sind Mittel zur Identifikation des Bedieners angeordnet. Hierdurch ist die Ergänzung eines Datensatzes um die Identität des Bedieners ermöglicht, wodurch gewährleistet ist, dass der Autor eines erfassten Textes jederzeit identifizierbar ist. Zudem kann sichergestellt werden, dass nur von autorisierten Personen verfasste Texte über den Digitalisierstift in das Krankenhausinformationssystem gelangen können.

Bevorzugt ist die H7-Schnittstelle mit einer WLAN- und/oder USB-Schnittstelle gekoppelt. Hierdurch ist ein zeitnaher unkomplizierter Datentransfer in das Krankenhausinformationssystem ermöglicht.

Der vorliegenden Erfindung liegt weiterhin die Aufgabe zugrunde, ein Verfahren zur zeitnahen zentralen Erfassung von handschriftlich verfassten Patienteninformationen in einem Krankenhaus zu schaffen. Gemäß der Erfindung wird diese Aufgabe durch die Merkmale des Patentanspruchs 10 gelöst.

Mit der Erfindung ist ein Verfahren zur zeitnahen und zentralen Erfassung von handschriftlich verfassten Patienteninformationen in einem Krankhaus geschaffen. Dabei werden die Patienteninformationen zunächst mit einer Vorrichtung der zuvor beschriebenen Art niedergeschrieben und digital abgelegt, wobei über einen Barcode eine Patientenkennnummer eingelesen wird. Der Datensatz der digital abgelegten Patienteninformationen wird dieser Patientenkennnummer zugeordnet und der Datensatz wird anschließend über eine H7-Schnittstelle in einen Speicher des Krankenhauscomputersystems übertragen, wo sie in eine der Patientenkennnummer zugeordneten digitalen Patientenakte abgelegt werden. Dabei kann die Zuordnung einer Patientenkennnummer zu einem digital abgelegten Datensatz eines schriftlich verfassten Textes auch zeitversetzt erfolgen. Beispielsweise kann zunächst bei der ersten Befundaufnahme in einem Krankenwagen dieser schriftlich verfasste Befund in den Speicher abgelegt werden. Die Zuordnung zur Patientenkennnummer erfolgt nach der Generierung der Kennnummer im Krankenhaus.

In Weiterbildung der Erfindung wird der Bediener der Vorrichtung über eine Identifikationseinrichtung, bevorzugt über einen Fingerabdruckscanner, identifiziert und die Bedieneridentifikation wird dem Datensatz beigefügt. Hierdurch ist der Autor eines mit der Vorrichtung verfassten Textes jederzeit ermittelbar.

Vorteilhaft erfolgt die Datenübertragung von der Vorrichtung zum Krankenhauscomputersystem drahtlos über eine WLAN-Schnittstelle. Alternativ können selbstverständlich auch andere, drahtgebundene Datenübertragungsverfahren zum Einsatz kommen.

In Ausgestaltung der Erfindung werden die von der Vorrichtung erfassten handschriftlich niedergelegten Patientendaten über ein Texterkennungsmodul in einen druckschriftlichen Text überführt, der in dem Speicher des Krankhauscomputersystems abgelegt wird. Hierdurch ist die Lesbarkeit der handschriftlich erfassten Texte insbesondere durch einen Dritten erhöht. Zudem sind die so abgelegten Texte in dem Computersystem nach Stichworten recherchierbar.

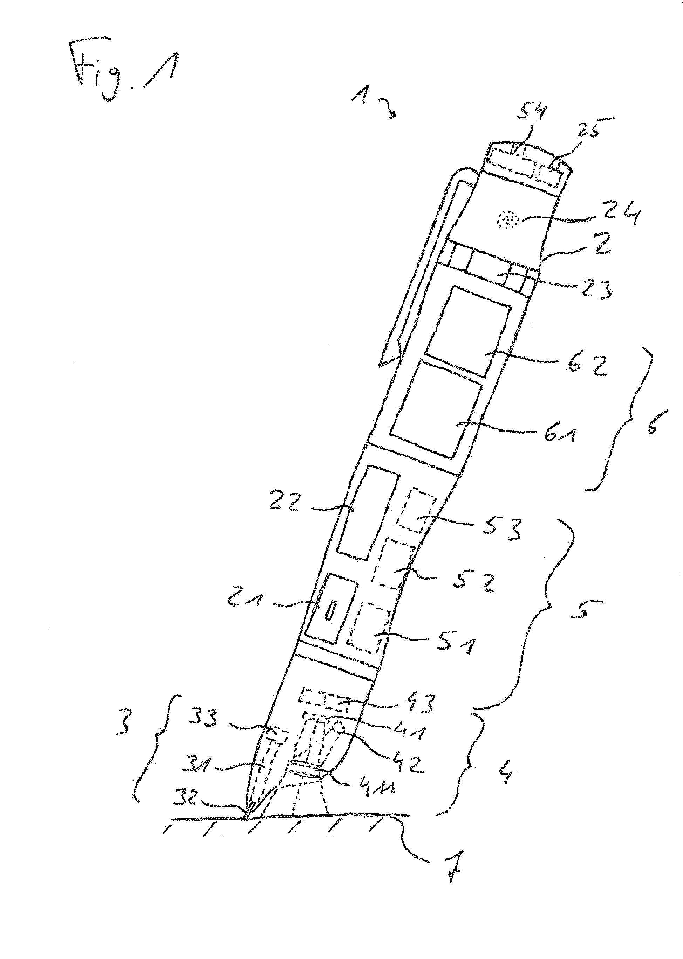

Andere Weiterbildungen und Ausgestaltungen der Erfindungen sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt einen erfindungsgemäßen Digitalisierstift zum Einsatz in Krankhausumgebungen.

Der als Ausführungsbeispiel gewählte Digitalisierstift 1 besteht im Wesentlichen aus einem Gehäuse 2, in dem ein Schreibmodul 3, ein Bildedassungsmodul 4 sowie eine mit dem Bilderfassungsmodul 4 gekoppelte Rechnereinheit 5 angeordnet sind. Weiterhin ist in dem Gehäuse 2 eine Identifikationseinheit 6 angeordnet. Das Gehäuse 2 ist in üblicher Ausgestaltung eines Füllfederhalters ausgebildet. Es ist ein Schieber 21 vorgesehen, der mit dem Schreibmodul 3 verbunden ist und der gleichzeitig der Ansteuerung einer LED-Einheit 43 des Bildererfassungsmoduls 4 dient. Weiterhin ist ein Akku 22 angeordnet, der mit einem Netzanschluss 25 verbunden ist. Darüberhinaus sind an dem Gehäuse 2 ein Mikrofon 23 sowie ein Lautsprecher 24 angeordnet.

Das Schreibmodul 3 besteht im Wesentlichen aus einem Tintentank 31, der mit einer Schreibfeder 32 verbunden ist. An dem Tintentank 31 ist weiterhin ein Drucksensor 33 zur Detektierung eines Schreibvorgangs angeordnet. Der Drucksensor 33 ist mit der Rechnereinheit 5 verbunden.

Das entsprechend einer Kamera aufgebaute Bilderfassungsmodul 4 besteht im Wesentlichen aus einem Bildsensor 41, der hinter einer Linse 411 angeordnet ist. Weiterhin sind im Ausführungsbeispiel ein Barcodereader 42 sowie eine LED-Einheit 43 angeordnet.

Die Rechnereinheit 5 besteht im Wesentlichen aus einem Prozessor 51, der mit einem Speicher 52 sowie einem Transceiver 53 verbunden ist. Weiterhin ist eine USB-Schnittstelle 54 zum Datentransfer angeordnet. Es ist ein Neigungssensor 55 zur Erfassung von Lagedaten des Digitalstifts 1 angeordnet.

Die Identifikationseinheit 6 besteht im Wesentlichen aus einem Fingerabdruckscanner 61 sowie einem Display 62, die mit der Rechnereinheit 5 verbunden sind.

Zum Einsatz des erfindungsgemäßen Digitalisierstiftes identifiziert sich der Benutzer zunächst durch einen Daumenaufdruck auf dem Fingerabdruckscanner 61. Bei positiver Erkennung des Benutzers wird dessen Name auf dem Display 62 angezeigt und der Digitalisierstift 1 wird aktiviert. Die Auswertung des von dem Fingerabdruckscanner 61 aufgenommenen Daumenabdrucks sowie die Freigabe des Digitalisierstiftes 1 erfolgt über die Rechnereinheit 5. Bei der Verfassung eines handschriftlichen Textes mittels des Digitalstifts 1 wird die Schreibfeder 32 auf ein mit einem Mikroraster versehenen Mikropapier 7 gedrückt, wodurch auf dieses Tinte aus dem Tintentank 31 aufgebracht wird. Dabei signalisiert der Drucksender 33 der Rechnereinheit 5 den Beginn einer Texterstellung. Der verfasste handschriftliche Text wird sodann über den Bildsensor 31 kontinuierlich erfasst und digitalisiert und die so digitalisierten Daten werden über den Prozessor 51 in dem Speicher 52 abgelegt. Die Stromversorgung der einzelnen Komponenten erfolgt über den Akku 22.

Die Zuordnung des handschriftlich geschriebenen Textes zu einem Patienten erfolgt über einen Barcodescanvorgang. Hierzu wird der an dem Gehäuse 2 angeordnete Schieber 21 in eine obere Position verfahre, wobei die Schreibfeder 32 in das innere des Gehäuses 2 zurück verfahren wird. Gleichzeitig wird die LED-Einheit 43 aktiviert. Wird nun der Digitalisierstift 1 über einen entsprechenden Barcode gefahren, wird der durch die LED-Einheit 43 beleuchtete Code über den Barcodereader 42 erfasst und numerisch in dem Speicher 52 abgelegt. Ist der Digitalisierstift 1 über eine Drahtlosschnittstelle mit dem Krankhausinformationssystem verbunden, so kann nun der Namen des entsprechenden Patienten über dem eingelesenen Barcode ermittelt und auf dem Display 62 angezeigt werden. Durch die eingefahrene Schreibfeder 32 ist bei Beaufschlagung des zu lesenden Barcodes mit Tinte vermieden.

Ist das Mikrofon 23 über eine - nicht dargestellte - Taste aktiviert, so werden während des Schreibvorgangs gleichzeitig Audiosignale aufgenommen und synchron zum digital erfassten Text in dem Speicher 52 abgelegt. Aufgenommene Audiosignale wie auch beispielsweise Statussignale des Digitalisierstifts 1 können über den Lautsprecher 24 ausgegeben werden.

In einer alternativen Ausgestaltung des Digitalisierstifts 1 ist der Bildsensor 41 sowie die mit diesem verbundene Rechnereinheit 5 derart ausgebildet, dass zwischen einem Texterfassungsmodus und einem Barcodeerfassungsmodus gewechselt werden kann. Im Texterfassungsmodus werden in der vorbeschriebenen Art und Weise handschriftliche Texte während deren Erstellung digitalisiert und in dem Speicher 52 abgelegt Im Barcodemodus werden von dem Bildsensor 41 lediglich Hell-Dunkel-Sequenzen detektiert, welche durch Rechnereinheit 5 in eine numerische Abfolge decodiert und nachfolgend in Speicher 52 abgelegt werden. Im Barcode-Mode erfolgt eine Beaufschlagung des Barcodes über die LED-Einheit 43. Ein zusätzlicher Barcodereader 42 ist nicht erforderlich. Die Umschaltung zwischen Texterkennungs-Mode und Barcode-Mode erfolgt über den Schieber 21, welcher gleichzeitig die Schreibfeder 32 in das innere des Gehäuses 2 verbringt.

## Patentansprüche

1. Vorrichtung zur Erstellung und gleichzeitigen digitalen Erfassung von handschriftlichen Texten, umfassend einen Stift zum Auftrag von Tinte auf einem mit einem Mikroraster versehenen Papier, eine Kamera zur visuellen Erfassung der Schreibbewegung des Stiftes auf dem Mikroraster des Papiers, eine mit einer Speichereinheit verbundene Prozessoreinheit zur Erfassung und Speicherung des durch die Kamera visuell aufgezeichneten Textes, wobei eine Schnittstelle zur Übertragung eines Textes aus der Speichereinheit zu einem externen Speichermedium angeordnet sind, **dadurch gekennzeichnet, dass** Mittel zur Erfassung eines Barcodes angeordnet sind und dass die Schnittstelle nach dem HL7-Standard ausgebildet ist.

2. Vorrichtung nach Anspruch 1, **dadurch gekennzeichnet, dass** die Mittel zur Erfassung eines Barcodes einen an dem Stift (1) angeordneten Barcodescanner (42) umfassen.

3. Vorrichtung nach Anspruch 2, **dadurch gekennzeichnet, dass** das der Barcodescanner durch die vorhandene Kamera (41) gebildet ist, wobei eine Lichtquelle (43) zur Projektion eines Punktlichts auf einen zu lesenden Barcode angeordnet ist.

4. Vorrichtung nach Anspruch 3, **dadurch gekennzeichnet, dass** an dem Stift (1) Mittel zur Aktivierung der Lichtquelle (43) angeordnet sind, wobei die Prozessoreinheit (51) derart eingerichtet ist, dass sie bei aktivierter Lichtquelle (43) in einen Barcode-Mode versetzt wird, bei dem die von der Kamera (41) gelieferten Hell-Dunkel-Folgen eines Barcodes in einen numerischen Code umgewandelt werden.

5. Vorrichtung nach einem der vorgenannten Ansprüche, **dadurch gekennzeichnet, dass** der Stift (1) eine einfahrbare Schreibfeder (32) aufweist, wobei die Vorrichtung derart eingerichtet ist, dass bei Einfahren der Schreibfeder (32) die Lichtquelle (43) aktiviert wird und die Prozessoreinheit (51) in den Barcode-Mode versetzt wird.

6. Vorrichtung nach einem der vorgenannten Ansprüche, **dadurch gekennzeichnet, dass** ein Mikrofon (23) angeordnet ist, welches derart mit der Prozessoreinheit (51) verbunden ist, dass von dem Mikrofon (23) aufgenommene Audiosignale synchron zu geschriebenen Texten in dem Speicher (52) abgelegt werden.

7. Vorrichtung nach einem der vorgenannten Ansprüche, **dadurch gekennzeichnet, dass** Mittel zur Identifikation des Bedieners angeordnet sind.

8. Vorrichtung nach Anspruch 7, **dadurch gekennzeichnet, dass** die Mittel zur Identifikation des Bedieners einen Fingerabdruckscanner (61) umfassen, der an dem Stift (1) angeordnet ist.

9. Vorrichtung nach einem der vorgenannten Ansprüche, **dadurch gekennzeichnet, dass** die H7-Schnittstelle mit einer WLAN- und/oder USB- Schnittstelle gekoppelt ist.

10. Verfahren zur zeitnahem zentralen Erfassung von handschriftlich verfassten Patienteninformationen in einem Krankenhaus, wobei die Patienteninformationen mit einer Vorrichtung nach einem der vorgenannten Ansprüche niedergeschrieben und digital abgelegt werden, über einen Barcode eine Patientenkennnummer eingelesen wird, der Datensatz der digital abgelegten Patienteninformationen dieser Patientenkennnummer zugeordnet wird und der Datensatz anschließend über eine H7-Schnittstelle in einen Speicher des Krankenhauscomputersystem übertragen werden, wo sie in einer der Patientenkennnummer zugeordneten digitalen Patientenakte abgelegt werden.

11. Verfahren nach Anspruch 10, **dadurch gekennzeichnet, dass** der Bediener der Vorrichtung über eine Identifikationseinrichtung, bevorzugt über einen Fingerabdruckscanner (61), identifiziert wird und die Bedieneridentifikation dem Datensatz beigefügt wird.

12. Verfahren nach Anspruch 10 oder 11, **dadurch gekennzeichnet, dass** die Datenübertragung von der Vorrichtung zum Krankenhauscomputersystem drahtlos über eine WLAN-Schnittstelle erfolgt.

13. Verfahren nach einem der Ansprüche 10 bis 12, **dadurch gekennzeichnet, dass** die von der Vorrichtung erfassten handschriftlich niedergelegten Patientendaten über ein Texterkennungsmodul in einen druckschriftlichen Text überführt werden, der in dem Speicher des Krankenhauscomputersystems abgelegt wird.
